(19) Europäisches Patentamt
European Patent Office
Office européen des brevets

(11) **EP 4 132 109 A1**

(12) **EUROPEAN PATENT APPLICATION**
published in accordance with Art. 153(4) EPC

(43) Date of publication:
**08.02.2023 Bulletin 2023/06**

(21) Application number: **21784520.5**

(22) Date of filing: **31.03.2021**

(51) International Patent Classification (IPC):
*H04W 36/30* (2009.01)   *H04B 17/382* (2015.01)
*H04B 17/391* (2015.01)   *H04W 48/16* (2009.01)

(52) Cooperative Patent Classification (CPC):
**H04B 17/382; H04B 17/391; H04W 36/30;
H04W 48/16**

(86) International application number:
**PCT/JP2021/013920**

(87) International publication number:
**WO 2021/205959 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2020 JP 2020071258**

(71) Applicant: **Sony Group Corporation**
**Minato-ku, Tokyo 108-0075 (JP)**

(72) Inventors:
• **HORITA, Koki**
  **Tokyo 140-0002 (JP)**
• **ITAGAKI, Takeshi**
  **Tokyo 108-0075 (JP)**
• **UMEDA, Tetsuo**
  **Tokyo 108-0075 (JP)**

(74) Representative: **D Young & Co LLP**
**120 Holborn**
**London EC1N 2DY (GB)**

(54) **INFORMATION PROCESSING DEVICE, SERVER, INFORMATION PROCESSING SYSTEM, AND INFORMATION PROCESSING METHOD**

(57)   [Object] To enhance a shared model in a case of predicting a wireless environment by machine learning securely and efficiently in terms of personal information protection.

[Solving Means] This information processing system includes: one or more information processing apparatuses including a first arithmetic processing unit that learns a model for predicting a wireless environment, uploads a result of the learning to a server, and predicts a wireless environment by using a shared model obtained by integrating one or more learning results in the server; and a server including a second arithmetic processing unit that integrates one or more learning results in the one or more information processing apparatuses and generates a shared model, and distributes the shared model to the one or more information processing apparatuses.

FIG.1

**Description**

Technical Field

The present technology relating to an information processing apparatus, a server, an information processing system, and an information processing method that predict a wireless environment by machine learning.

Background Art

In recent years, as information terminals such as smartphones, those that installs a plurality of communication bearers have been a mainstream. Here, the communication bearer means a series of physical or logical paths for transferring users' normal information. In general, priorities are given to the respective communication bearers. Further, there is known a method of measuring a throughput of a communication bearer in use and switching to another communication bearer on the basis of a measurement result (e.g., see Patent Literature 1).

Citation List

Patent Literature

Patent Literature 1: Japanese Patent
Application Laid-open No. 2010-135951

Disclosure of Invention

Technical Problem

In the current state, the precision of prediction of a wireless environment is insufficient, and for example, there is communication quality degradation for each communication path. Therefore, it leads to lowering of the degree of satisfaction of users, for example, due to continuous use of the wireless environment where the communication status is degraded or the like.
It is an object of the present technology to provide an information processing apparatus, a server, an information processing system, and an information processing method that can improve the prediction precision of a wireless environment and can enhance a shared model in a case of predicting the wireless environment by machine learning securely and efficiently in terms of personal information protection.

Solution to Problem

In order to solve the above-mentioned problem, an information processing apparatus according to the present technology includes
an arithmetic processing unit that

learns a model for predicting a wireless environment,
uploads a result of the learning to a server, and
predicts a wireless environment by using a shared model obtained by integrating one or more learning results in the server.

The wireless environment may be at least one of that a communication status of a communication path to which a prediction target of the wireless environment is connected is deteriorated or that characteristics of a communication path to which the prediction target of a wireless environment is not connected are not good.
The arithmetic processing unit may be configured to switch a communication path to be connected on the basis of a prediction result of a wireless environment.
Switching the wireless path by the arithmetic processing unit may be switching between communication paths using different communication methods.
Switching the wireless path by the arithmetic processing unit may be switching between different communication paths using a same communication method.
The arithmetic processing unit may be configured to switch the communication path at a particular timing.
The timing of switching the communication path may be at least any one of a timing when a communication traffic volume of an application becomes equal to or smaller than a threshold, a timing when a user does not use the information processing apparatus, or a timing depending on an attribute of a user.

The arithmetic processing unit may be configured to predict information about a relationship between time and position and a wireless environment.

The shared model is one classified for each cluster based on an attribute of a user.

The arithmetic processing unit may be configured to predict a wireless environment by using a composite model obtained by combining the result of the learning with the shared model acquired from the server.

A server according to another aspect of the present technology includes

an arithmetic processing unit that

integrates one or more learning results of a model for predicting a wireless environment in one or more information processing apparatuses and generates a shared model, and

distributes the shared model to the one or more information processing apparatuses.

The server may be constituted by a plurality of server apparatuses having a class relationship to each other, in which

a server apparatus at an upper-level class of the plurality of server apparatuses may be configured to integrate shared models generated by server apparatuses in a lower-level class and generate a shared model for the upper-level class.

An information processing system according to another aspect of the present technology includes:

one or more information processing apparatuses including

a first arithmetic processing unit that

learns a model for predicting a wireless environment,

uploads a result of the learning to a server, and

predicts a wireless environment by using a shared model obtained by integrating one or more learning results in the server; and

a server including

a second arithmetic processing unit that

integrates one or more learning results in the one or more information processing apparatuses and generates a shared model, and

distributes the shared model to the one or more information processing apparatuses.

An information processing method according to another aspect of the present technology includes:

learning, in one or more information processing apparatuses, a model for predicting a wireless environment and uploading a result of the learning to a server;

integrating, in the server, one or more learning results uploaded from the one or more information processing apparatuses and generating a shared model and distributing the shared model to the one or more information processing apparatuses; and

predicting, in one or more information processing apparatuses, a wireless environment by using the shared model.

Brief Description of Drawings

[Fig. 1] A diagram showing a configuration of an information processing system of a first embodiment according to the present technology and a basic flow of federated learning.

[Fig. 2] A block diagram showing a configuration of an information processing apparatus in the information processing system of Fig. 1.

[Fig. 3] A block diagram showing a configuration associated with federated learning of a server in the information processing system of Fig. 1.

[Fig. 4] A sequence diagram of a first download method of a model.

[Fig. 5] A sequence diagram of a second download method of a model.

[Fig. 6] A sequence diagram relating to learning joining of a model.

[Fig. 7] A flowchart of learning joining management by a learning joining management unit in the information processing apparatus.

[Fig. 8] A flowchart of a learning joining instruction unit in the server.

[Fig. 9] A flowchart of processing of a shared-model download unit in the information processing apparatus.

[Fig. 10] A flowchart of processing of a shared-model distribution unit in the server.

[Fig. 11] A diagram mainly showing processing of switching a communication bearer in the information processing apparatus.

[Fig. 12] A flowchart of an operation of estimating, using a shared model, a communication path in which a communication status is degraded.

Mode(s) for Carrying Out the Invention

Hereinafter, embodiments according to the present technology will be described with reference to the drawings.

<Overview of Present Embodiment>

As for products installing a plurality of communication bearers (4G, 5G (Sub6, mmW), IEEE802.11 wireless LAN, Bluetooth (registered trademark) PAN, ZigBee (registered trademark), and the like), which are represented by smartphones, a priority is generally determined for each bearer. This priority can vary depending on communication quality. However, communication quality estimation and a determination method therefor are insufficient in the current state. For example, there have been cases where users cannot do web browsing and the like with comfort because the communication bearers are not suitably selected.

As one of solutions, for example, a solution of predicting near-future quality of a communication bearer by machine learning and switching the communication bearer in a manner that depends on the prediction result has been studied. In this solution, in order to perform the machine learning, learning data is collected from information processing apparatuses such as users' smartphones and development devices and is uploaded to a server that performs the learning. However, data that can be collected from users is limitative from the perspective of personal information protection. More specifically, there is a concern about transferring, for example, user positions, use applications, user activity histories, sensor information, and the like, which are valid as the learning data, to the server. Therefore, it has been considered that there is a limitation on building a shared model suitable for switching to a bearer having higher communication quality.

As a first embodiment according to the present technology, an information processing system 100 using federated learning for generating a shared model that determines deterioration of a communication status will be described.

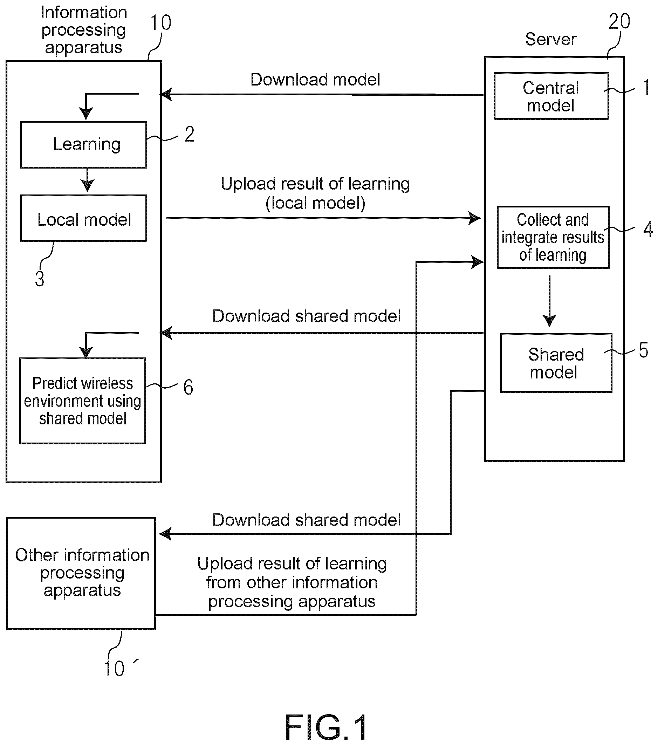

Fig. 1 is a diagram showing a configuration of the information processing system 100 and a basic flow of federated learning. The information processing system 100 includes one or more information processing apparatuses 10 such as smartphones, for example, that perform learning 2 of a model (central model) 1 and a server 20 that collects results (local models) 3 of learning by the one or more information processing apparatuses 10, integrates (4) them with results of learning of other information processing apparatuses 10', and reflects the results to the central model 1 and repeats these processes appropriate times, thereby generating a shared model 5 that is a highly refined model.

Here, a learning result uploaded from the information processing apparatus 10 to the server 20 is uploaded as a weight value of each node or as difference data from the weight value of each node of a model at a time at which it is distributed from the server 20 to the information processing apparatus 10. Accordingly, the upload volume can be reduced. Further, since raw data does not leak from the information processing apparatus 10 when uploading the difference data, it is useful from the perspective of personal information protection. Further, it is suitable for learning mass data owing to the upload volume reduction and upload cycles of the shared model 5 can be increased. Therefore, the highly refined shared model 5 can be efficiently obtained.

The shared model 5 obtained in the server 20 in the above-mentioned manner is distributed to the information processing apparatus 10. Using the acquired shared model 5, the information processing apparatus 10 predicts (6) a wireless environment, for example, predicts that a communication status of a wireless path to which the information processing apparatus 10 is connected will be deteriorated or that communication characteristics of a wireless path to which the information processing apparatus 10 is not connected will lower. Further, in a case where it is predicted that the communication status of the wireless path connected will be deteriorated, the information processing apparatus 10 switches a wireless path to be connected between wireless paths using different communication methods, for example, or switches between different wireless paths using the same communication method.

<Details of Present Embodiment>

Hereinafter, the first embodiment according to the present technology will be described more specifically.

(Configuration of Information Processing Apparatus 10)

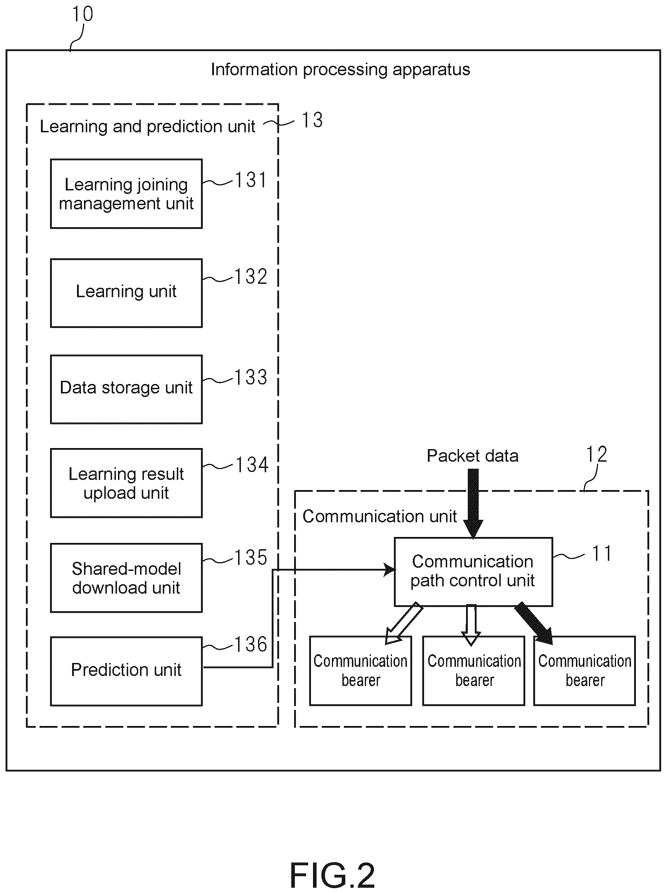

Fig. 2 is a block diagram showing a configuration of the information processing apparatus 10.

The information processing apparatus 10 includes a communication unit 12 and a learning and prediction unit 13. The communication unit 12 has a plurality of communication bearers and includes a communication path control unit 11 that performs control to switch a communication bearer to be used as appropriate. The learning and prediction unit 13 learns a model for predicting deterioration of a communication status of a communication bearer to which the information processing apparatus 10 is currently connected or can be connected in the communication unit 12 and predicts deterioration of the communication status of the communication bearer by using a shared model generated by the server 20 on the basis of the learning result of the model. The learning and prediction unit 13 is constituted by a central processing unit (CPU) that is a first arithmetic processing unit, a memory for storing programs and data to be executed by the CPU, and the like.

The learning and prediction unit 13 includes a learning joining management unit 131, a learning unit 132, a data storage unit 133, a learning result upload unit 134, a shared-model download unit 135, and a prediction unit 136.

The learning joining management unit 131, for example, sends an instruction to join in model learning to the server 20, acquires a model permitted to be learned from the server 20, and manages a timing of learning in the information processing apparatus 10.

The learning unit 132 learns the acquired model. The model learning is performed using data about communication parameters and the like indicating a communication status for each communication bearer for example, which is prestored in the data storage unit 133.

The learning result upload unit uploads a result of the model learning (information about the local model) to the server 20.

The shared-model download unit 135 downloads a shared model from the server 20 through inquiry to the server 20 as to whether or not it is possible to download the shared model.

Using the downloaded shared model, the prediction unit 136 predicts deterioration of a communication status of a communication path that the information processing apparatus 10 is using or can use.

(Communication Parameters)

The communication parameters used in learning will be described.

For example, in a case where the communication bearer is IEEE802.11, there can be communication parameters as follows, for example.

- Identifiers of a wireless LAN network, an access point, and the like such as a basic service set identifier (BSSID) and a service set identifier (SSID)
- CCA busy time (time duration in which a wireless device has been determined to be busy by carrier sense)
- Contention time (time duration of sending waiting time for sending packets by CSMA/CA)
- Radio on time (time duration in which the wireless device is in operation)
- Tx time (time duration in which the wireless device sends packets)
- Rx Time (time duration in which the wireless device receives packets)
- Access point detected by scan
- Parameter indicating another communication degradation status
- Parameter indicating a busy communication status

That obtained by combining some of these parameters and processing them by an arithmetic operation may be used.

The parameter indicating the busy communication status includes a round trip time (RTT) for a gateway of a connection access point, an average throughput, a TCP error rate, the number of users connected to the access point, a CCA busy time of the connection access point, the number of packets discarded after cancelling sending, information about whether the number of delayed packets in a sending buffer has exceeded a certain threshold, and the like.

In addition to the above-mentioned communication parameters, the following data that affects the communication may be used.

- Number of surrounding Bluetooth devices
- Number of cells visible from its own information processing apparatus
- Application in use
- Activity status
- Whether or not music is being played

- User motion and positional information obtained by a motion sensor and a GPS
- Positional information and connection time of the access point

For learning a model that estimates an access point at which communication congestion does not occur on the basis of the above-mentioned parameters, it is sufficient to add a correct label 1 to a congested access point, add a correct label 0 to a not congested access point, and perform learning.

The model used for learning may include simple regression analysis and the like besides neural networks such as a convolutional neural network (CNN) and a long short-term memory (LSTM).

(Configuration of Server 20)

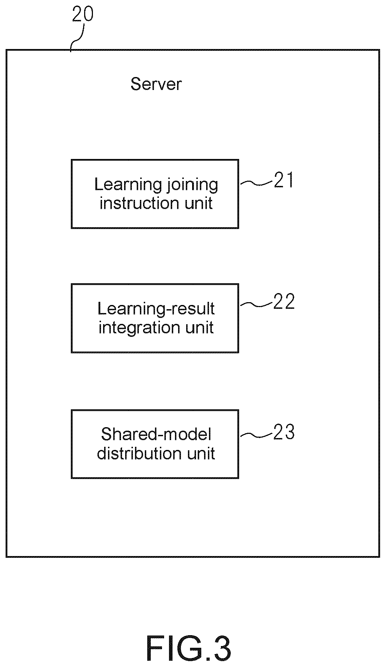

Fig. 3 is a block diagram showing a configuration associated with federated learning of the server 20.

As shown in the figure, the server 20 includes a learning joining instruction unit 21, a learning-result integration unit 22, and a shared-model distribution unit 23.

The learning joining instruction unit 21 determines whether or not it is possible to allow to join in learning of the information processing apparatus 10 that has requested to join in learning and notifies the information processing apparatus 10, which the learning joining instruction unit 21 allows to join in learning, of a learning joining request.

The learning-result integration unit 22 combines learning results (information about local models) uploaded from a plurality of information processing apparatuses 10 by averaging and the like or repeats the combining, thereby generating a shared model.

The shared-model distribution unit 23 distributes a shared model in accordance with a download request for the shared model from an information processing apparatus 10.

The learning joining instruction unit 21, the learning-result integration unit 22, and the shared-model distribution unit 23 are constituted by a central processing unit (CPU) that is a second arithmetic processing unit, a memory for storing programs and data to be executed by the CPU, and the like.

(Operation)

Next, the following operations of this information processing system 100 will be described.

1. Model download
2. Learning joining
3. Learning result upload
4. Shared-model distribution to the information processing apparatus 10
5. Inference using shared model

(1. Model Download)

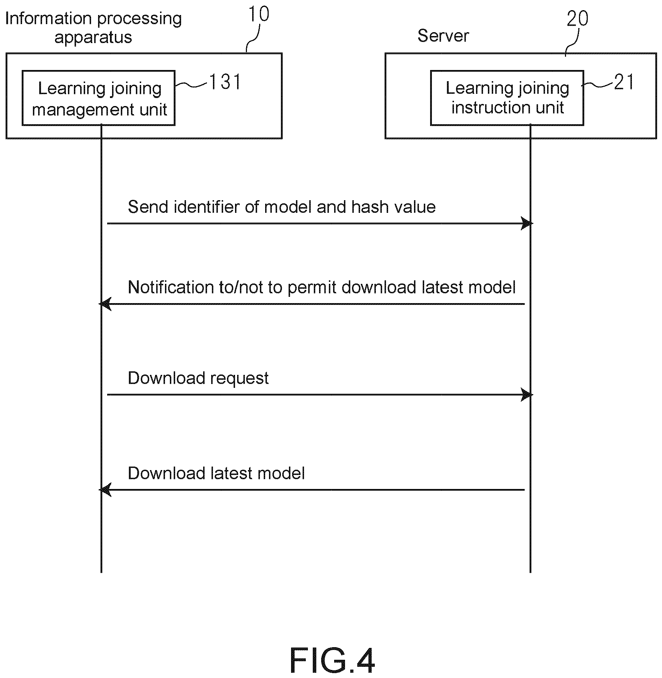

Fig. 4 is a sequence diagram of a first download method of a model.

The learning joining management unit 131 sends the identifier of the model retained in its own information processing apparatus 10 and a hash value indicating generation information of this model to the server 20. With respect to the model specified by the identifier received from the information processing apparatus 10, the learning joining instruction unit 21 of the server 20 compares the hash value of the corresponding model retained in the server 20 with the hash value notified from the information processing apparatus 10. In a case where both the hash values are different, the learning joining instruction unit 21 determines that the model retained in the server 20 is newer and sends signaling that permits download of this model, for example, an HTTP response code 200 or the like to the information processing apparatus 10. In a case where both the hash values are the same, the learning joining instruction unit 21 of the server 20 sends signaling indicating that it is impossible to download this model, for example, an HTTP response code 400 or the like to the information processing apparatus 10. When receiving a notification to permit the download, the learning joining management unit 131 of the information processing apparatus 10 requests the server 20 to download this model. The learning joining instruction unit 21 in the server 20 downloads this model to the information processing apparatus 10 in accordance with this request.

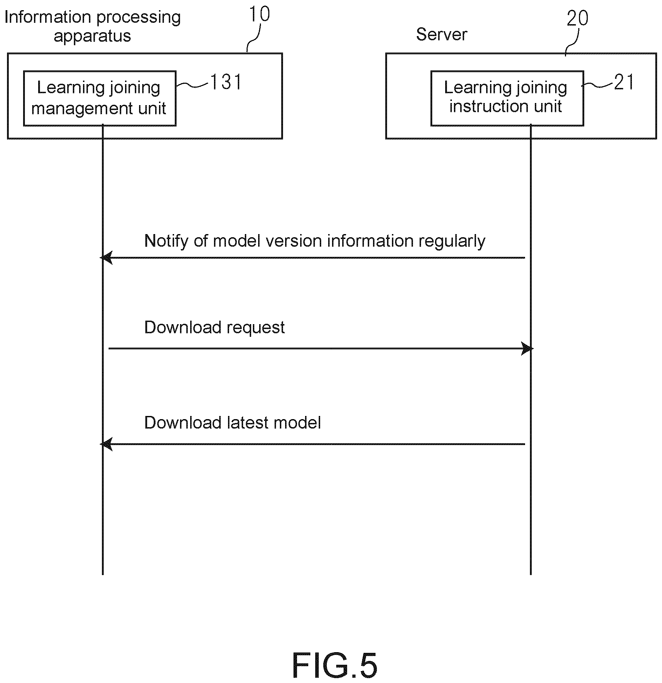

Fig. 5 is a sequence diagram of a second download method of a model.

The learning joining instruction unit 21 in the server 20 manages version information represented by update time and date or the like of each model as the generation information and notifies each information processing apparatus 10 of the version information of the model at constant time intervals. The learning joining management unit 131 in the information processing apparatus 10 compares the version information notified from the server 20 with the version information of the model that the information processing apparatus 10 has and requests the server 20 to download the model in a case where the version information notified from the server 20 is newer. The learning joining instruction unit 21 in the server 20 downloads this model to the information processing apparatus 10 in accordance with this request.

It should be noted that in a case where learning is not performed on the model acquired from the server 20 for a predetermined continuous time, the model may be automatically deleted from the information processing apparatus 10.

(2. Learning Joining)

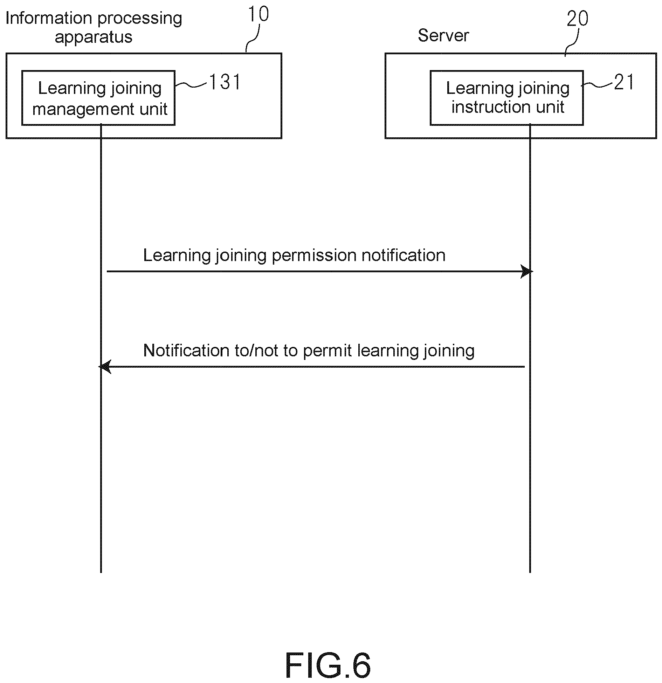

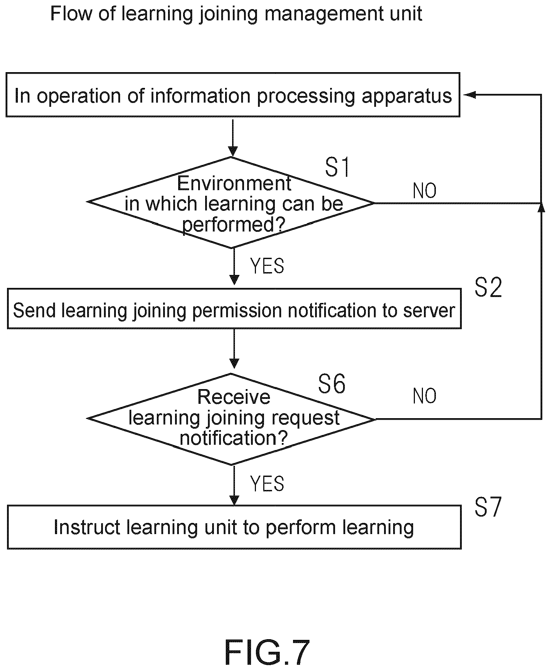

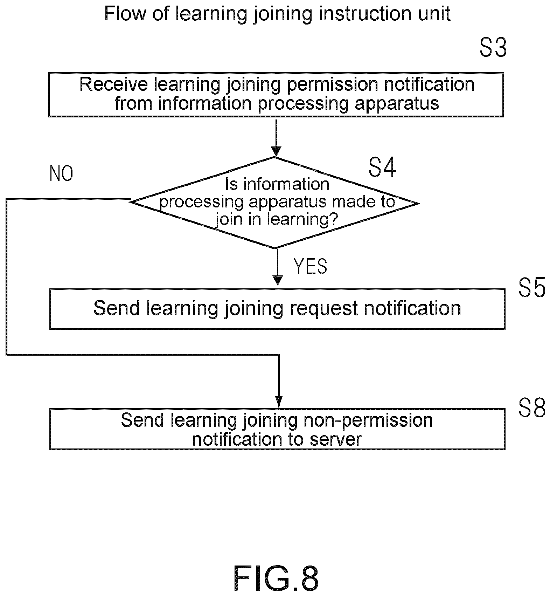

Fig. 6 is a sequence diagram relating to learning joining of a model, Fig. 7 is a flowchart of learning joining management by the learning joining management unit 131 in the information processing apparatus 10, and Fig. 8 is a flowchart of the learning joining instruction unit 21 in the server 20.

In the above-mentioned manner, a model is downloaded to the information processing apparatus 10. The server 20 controls a timing at which the model is learned actually.

That is, in a case where the information processing apparatus 10 enters an environment in which the information processing apparatus 10 can favorably perform information processing for learning (YES Step S1 in Fig. 7), the learning joining management unit 131 in the information processing apparatus 10 sends a learning joining permission notification to the server 20 (Step S2 in Fig. 7).

Examples of the environment in which the information processing apparatus 10 can favorably perform information processing for learning can include a charging duration, a duration in which a charge-free communication bearer is used, and a timing when user's processing is not performed (e.g., the display is off and it is suspended). It is desirable that the user can set this environment arbitrarily through a graphical user interface.

Examples of information included in the above-mentioned learning joining permission notification can include a charge status (charge rate or the like), a time of learning in which the information processing apparatus 10 joined recently, the amount of learning data in the information processing apparatus 10, and apparatus information such as a country code, a ZIP code, a cluster identifier, and a model name.

When the learning joining instruction unit 21 in the server 20 receives a learning joining permission notification from the information processing apparatus 1 (Step S3 in Fig. 8), the learning joining instruction unit 21 in the server 20 selects, on the basis of information included in the learning joining permission notification, an information processing apparatus 10 to be allowed to join in learning in the following manner for example (Step S4 in Fig. 8). For example, the learning joining instruction unit 21 selects one having a charge status (charge rate or the like) equal to or larger than a threshold, one for which the nearest learning time is the newest or oldest, one having the largest amount of learning data, one belonging to a particular country, one having a particular model name, or the like as the information processing apparatus 10 to be allowed to join in learning.

The learning joining instruction unit 21 in the server 20 sends a learning joining request notification to the information processing apparatus 10 determined to be allowed to join in learning (Step S5 in Fig. 8).

When the learning joining management unit 131 in the information processing apparatus 10 receives the learning joining request notification (YES in Step S6 of Fig. 7), the learning joining management unit 131 in the information processing apparatus 10 instructs the learning unit 132 to perform learning (Step S7 in Fig. 7). Accordingly, model learning starts in the learning unit 132.

The learning joining instruction unit 21 in the server 20 sends a learning joining non-permission notification to an information processing apparatus 10 determined not to be allowed to join in learning (Step S8 in Fig. 8). In a case where the learning joining management unit 131 in the information processing apparatus 10 receives the learning joining non-permission notification (NO in Step S6 of Fig. 7), the learning joining management unit 131 in the information processing apparatus 10 does nothing.

(3. Learning Result Upload)

After the learning unit 132 in the information processing apparatus 10 performs model learning, the learning result upload unit 134 sends to the server 20 a weight value (difference data) of each node of a model that is a result of the learning together with the number of pieces of data used for the learning, an identifier of the model that is the learning target, and the generation information such as hash value and version information. Using the learning-result integration unit 22 in the server 20, the server 20 generates a shared model integrating the learning result received from the information processing apparatus 10 by, for example, averaging with other learning results.

On the basis of the generation information such as the hash value and version information of the model that is the learning target sent with the learning result from the information processing apparatus 10, the learning-result integration unit 22 in the server 20 determines whether the learning result is data useful for generating the shared model. For example, the learning-result integration unit 22 in the server 20 checks whether the generation information of the model sent with the learning result from the information processing apparatus 10 is identical to the generation information of the model that the server 20 currently retains. Here, in a case where they are not identical, the learning result uploaded from the information processing apparatus 10 is discarded because the learning result uploaded from the information processing apparatus 10 is a learning result of a model at a generation older than the generation of the model that the server 20 currently retains. Further, in a case where the generation information of the model sent with the learning result from the information processing apparatus 10 is identical to the generation information of the model that the server 20 currently retains, the learning result uploaded from the information processing apparatus 10 is the learning result of the model that the server 20 currently retains. In this case, the learning-result integration unit 22 generates a shared model by for example averaging with other learning results, determining that the learning result sent from the information processing apparatus 10 is data useful for generating the shared model.

Although for example, federated averaging, a federated learning matching algorithm, and the like can be used as an integration method for the learning result, other methods may be used. In addition, the learning-result integration unit 22 in the server 20 may adjust weighing for reflecting each learning result to the shared model on the basis of the amount of learning data. More specifically, for example, the value of weighing for reflecting each learning result to the shared model is increased as the amount of learning data becomes larger, as one of methods. The model thus generated on the basis of the result obtained by integrating more learning results is defined as a highly refined shared model in a next generation.

(4. Shared-Model Distribution to Information Processing Apparatus 10)

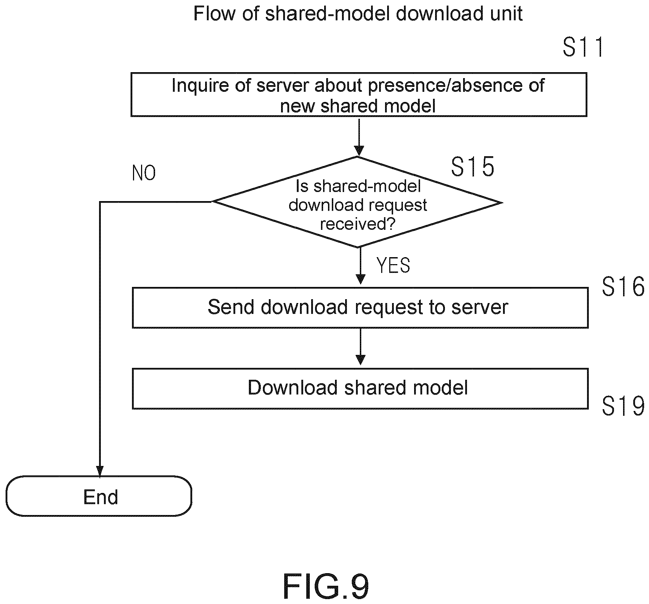

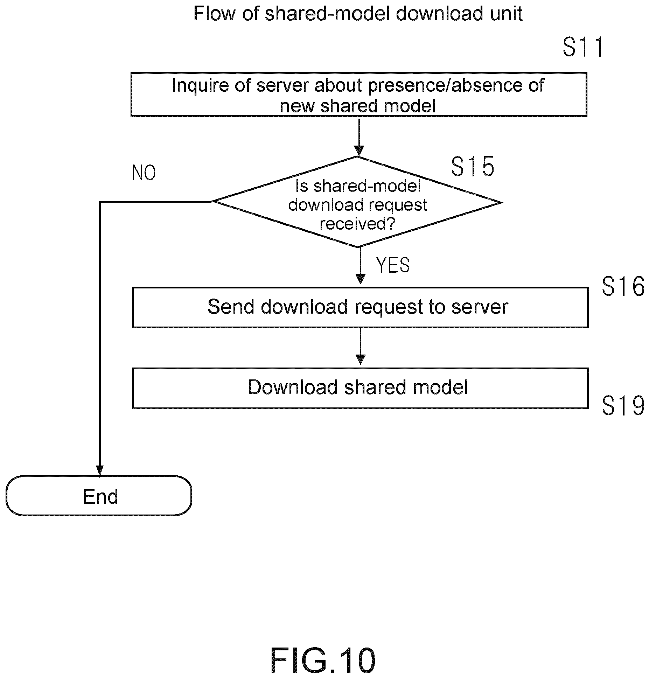

Figs. 9 and 10 are flowcharts relating to model distribution from the server 20 to the information processing apparatus 10. Fig. 9 is a flowchart showing processing of the shared-model download unit 135 in the information processing apparatus 10. Fig. 10 is a flowchart showing processing of the shared-model distribution unit 23 in the server 20.

The shared-model distribution unit 23 in the server 20 sets models that have finished learning in a predetermined number of rounds (e.g., 100 rounds or the like) or have particular learning precision (e.g., precision of 95% or more or the like) or models that ensure both as shared models that can be distributed.

The shared-model download unit 135 in the information processing apparatus 10 inquires of the server 20 about the presence/absence of a shared model newer than the shared model retained by the information processing apparatus 10, for example, at constant time intervals (e.g., once a week or the like) (Step S11 in Fig. 9). This inquiry includes generation information such as hash value and version information of the shared model that the information processing apparatus 10 retains.

When the shared-model distribution unit 23 in the server 20 receives the inquiry from the information processing apparatus 10 (Step S12 in Fig. 10), the shared-model distribution unit 23 in the server 20 compares the generation information of the shared model in the server 20 with the generation information of the shared model in the information processing apparatus 10, which is included in the inquiry, thereby checking whether a shared model newer than the shared model in the information processing apparatus 10 is present in the server 20. In a case where a shared model in a newer generation is present in the server 20 (YES Step S13 in Fig. 10), the shared-model distribution unit 23 in the server 20 sends a shared-model download request to the information processing apparatus 10 (Step S14 in Fig. 10). In a case where such a shared model is not present, the shared-model distribution unit 23 in the server 20 terminates the processing without doing anything.

When the shared-model download unit 135 in the information processing apparatus 10 receives the shared-model download request from the server 20 (YES in Step S15 in Fig. 9), the shared-model download unit 135 in the information processing apparatus 10 sends a download request for that shared model to the server 20 (Step S16 in Fig. 9). The shared-model distribution unit 23 in the server 20 downloads such a shared model to the information processing apparatus 10 in accordance with this download request (Steps S17 and S18 in Fig. 10). At this time, the downloaded shared model is encrypted with a secret key of the server 20 and decrypted with a public key installed in the information processing apparatus 10. The decrypted shared model is overwritten and stored on the existing shared model in the information processing apparatus 10.

(5. Estimation Using Shared Model)

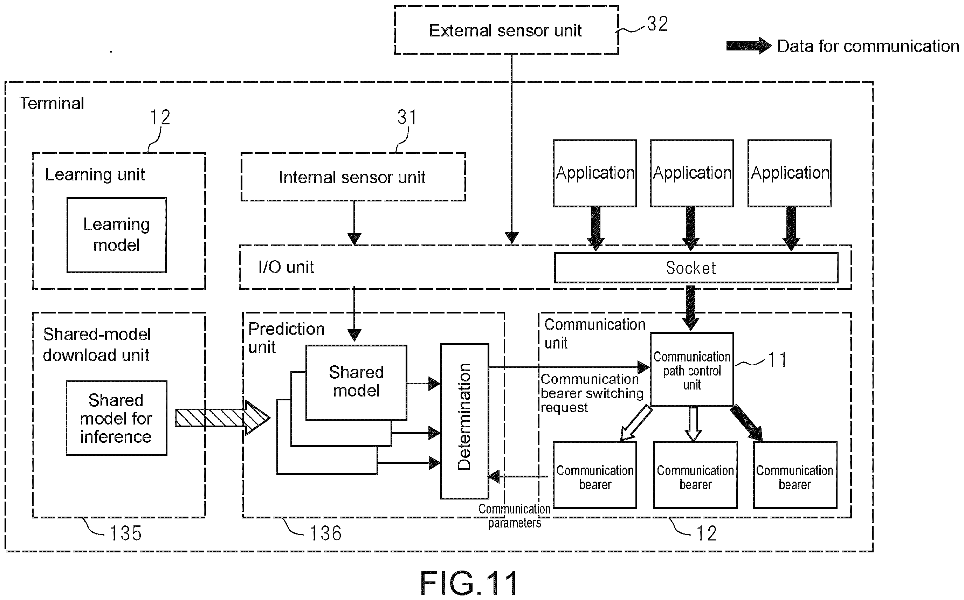

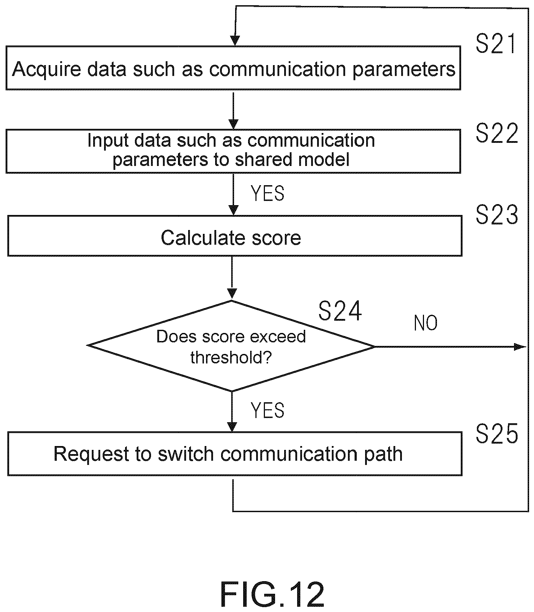

Fig. 11 is a diagram mainly showing processing of switching the communication bearer in the information processing apparatus 10. Fig. 12 is a flowchart of an operation of estimating the communication path the communication status of which is degraded, using the shared model.

The shared model downloaded by the shared-model download unit 135 in the information processing apparatus 10 is installed to the prediction unit 136. A plurality of shared models can be installed in the prediction unit 136 and a plurality of inference processes can be performed using the plurality of shared models. For example, a model for predicting a degree of degradation of IEEE802.11 communication and a model for predicting congestion of the access point can perform inference processes or the like at the same time.

The prediction unit 136 acquires various types of data such as communication parameters regarding each communication bearer of the communication unit 12, information of an internal sensor 31 and an external sensor 32, and also, information about an application that affects the communication (Step S21), inputs them to the shared model (Step S22), and calculates a score of output of the shared model (Step S23). Here, assuming output of a shared model for predicting a degree of degradation of IEEE802.11 communication for example, in a case where the score of output of the model exceeds a threshold (YES in Step S24), the prediction unit 136 determines to issue a communication bearer switching request to the communication path control unit 11 (Step S25). For example, the prediction unit 136 issues a communication path switching request for instruction to switch to a communication bearer other than IEEE802.11 to the communication path control unit 11 in the communication unit 12. In accordance with the communication path switching request, the communication path control unit 11 in the communication unit 12 switches the communication path used by the information processing apparatus 10.

The communication path control unit 11 is configured to switch the communication path at a particular timing. The timing of switching the communication path is selected avoiding as much as possible timings at which communication for which continuity should be ensured is highly likely to be performed. Examples of the timing can include a timing at which a communication traffic volume of an application becomes equal to or smaller than a threshold, a timing when the user does not use the information processing apparatus 10 (e.g., the display is off and it is suspended), and a timing at which the communication traffic volume is statistically known to lower depending on the user's attributes (contracted plan of communication, residence, gender, age, occupation, nationality, and the like).

As described above, in accordance with the present embodiment, the shared model for predicting a communication path or the like the communication status of which is degraded is learned by federated learning in the information processing apparatus 10 of each user. In this manner, the model can be enhanced securely and efficiently without sending sensitive information such as the user's personal information and the information about the information processing apparatus 10 as learning data to an external device from the information processing apparatus 10 of the user. Further, since a learning result obtained by each information processing apparatus 10 is uploaded to the server 20 as difference data between the original model that is the learning target and the weight value of the node, the raw data is not updated to the server 20, and it is possible to protect the personal information and reduce the update volume.

It should be noted that in the information processing apparatus 10 described above, the learning and prediction unit 13 does not necessarily need to be located in the information processing apparatus 10, and for example, a configuration in which the learning and prediction unit 13 is provided in an edge server or a cloud server, data necessary for learning such as communication parameters is loaded from the information processing apparatus 10, and learning results and prediction results are sent to the information processing apparatus 10 may be employed.

<Second Embodiment>

In general, after connecting to an access point of IEEE802.11, the communication status can be deteriorated when the user moves away from the access point or a radio wave transmission environment surrounding the access point is degraded. For predicting such communication degradation at the access point after connection, the shared model learned in a distributed manner by federated learning can also be used. In this case, it is desirable also from the perspective of personal information protection because positional information of the information processing apparatus 10, an identifier (BSSID) of each access point, and the like, which are used for model learning, do not leak from the information processing apparatus 10.

In the present embodiment, BSSID, SSID, the number of packets discarded after cancelling sending, the number of successfully sent packets, the number of resent packets, the number of successfully received packets, CCA Busy Time, Tx Time, Rx Time, radio on time, contention time, channel width, and the like after connection are input to the model as communication parameters of learning data with a correct label every n-seconds. In the learning data with the correct label that is input every n-seconds, correct labels 1 meaning that they are correct are added to learning data n-seconds before disconnection and learning data the communication status of which is degraded and correct labels 0 meaning that they are incorrect are added to other learning data. Other processing is performed in the same flow as the above-mentioned first embodiment. For example, the communication parameters collected by the communication unit after connection to IEEE802.11 are input to the shared model. In a case where a value output from the shared model is equal to or larger than a threshold, a request to switch the communication path from IEEE802.11 to another communication bearer is issued to the communication path control unit in the communication unit. In this manner, the communication bearer is switched.

<Third Embodiment>

In general, after connecting to an access point of IEEE802.11, the communication status can be deteriorated when the user moves away from the access point or a radio wave transmission environment surrounding the access point is degraded. For predicting such communication degradation at the access point due to differences in the user's activity after connection, the shared model learned in a distributed manner by federated learning can also be used. In this case, it is desirable also from the perspective of personal information protection because output of sensors, for example, output of an acceleration sensor, positional information, output of a pedometer, a pulsation rate, blood pressure information, and the like, which are related to the user's personal information, do not leak from the information processing apparatus 10.

In the present embodiment, output of an acceleration sensor, positional information, output of a pedometer, a pulsation rate, blood pressure information, output of an illuminance sensor, output of an atmospheric pressure sensor, and the like are input to the shared model as communication parameters of learning data with a correct label every n-seconds. In such learning data with the correct label that is input every n-seconds, correct labels 1 meaning that they are correct are added to learning data n-seconds before disconnection and learning data the communication status of which is degraded and correct labels 0 meaning that they are incorrect are added to other learning data. Other processing is performed in the same flow as the above-mentioned first embodiment. For example, the communication parameters collected by the communication unit after connection to IEEE802.11 are input to the shared model. In a case where a value output from the shared model is equal to or larger than a threshold, a request to switch the communication path from IEEE802.11 to another communication bearer is issued to the communication path control unit in the communication unit. In this manner, the communication bearer is switched.

<Modified Example 1>

A switching policy of the communication bearer differs depending on a user. Therefore, the switching policy can be classified into several patterns. However, it has been difficult to express switching timings matching users' preference with a single model.

This problem can be solved by preparing a shared model for each of clusters classified by, for example, the user's characteristics, for example, gender, age, and the like to the server 20, and acquiring and learning, the information processing apparatus 10, a shared model matching the user's characteristics from the server 20. More particularly, for example, when a learning joining permission notification is set from the information processing apparatus 10 to the server 20, the server 20 is notified of an identifier of a cluster matching the user's characteristics. Accordingly, a shared model associated with the identifier is downloaded to the information processing apparatus 10 from the server 20, and learning in the learning unit 132 of the information processing apparatus 10 is performed.

Although the case where the shared model is clustered on the basis of the user's characteristics has been described above, the shared model may be clustered by a used network carrier, its plan, and the like.

<Modified Example 2>

In this modified example 2, in order to add characteristics depending on the user of the information processing apparatus 10 and the environment to the shared model, the shared model acquired from the server 20 by the shared-model download unit 135 is combined with a local model learned by the learning unit 132 in the information processing apparatus 10 and stored in the data storage unit 133. As a combining method, for example, the weight of the shared model and the weight of the local model are combined at a particular rate. For example, provided that the weight of the shared model is denoted by w_central, the weight of the local model is denoted by w_user, and the degree of fusion is denoted by $\alpha$, a weight w of the model finally used by the prediction unit 136 is as follows:

$$w = \alpha w\_user + (1 - \alpha)w\_central \qquad (0 < \alpha < 1).$$

By changing the variable $\alpha$, it can be changed between a behavior close to the local model to a behavior equal to the shared model. The variable $\alpha$ may be set by the user or may be automatically changed in accordance with the system's status.

Further, the shared model and the local model may be both used, their results may be combined, and an inference result may be derived. For example, provided that the output of the local model is denoted by y_user, the output of the shared model is denoted by y_central, and the degree of fusion is denoted by $\alpha$, output y of the model finally used by the prediction unit 136 is as follows:

$$y = \alpha y\_user + (1 - \alpha)y\_central \qquad (0 < \alpha < 1).$$

<Modified Example 3>

This modified example relates to a technology that predicts a relationship between positional information and time and a communication status for each base station such as a cellular base station and a carrier Wi-Fi base station.

In this case, a model having the positional information and time as input is used as the model for each base station. Further, cellular information (number of component carriers, an average rate (MCS: modulation and coding scheme), capability (LTE/HSPA+/GSM), signal strength, the number of MIMO layers, the number of hours allocated for communication, the number of actual resource blocks, received/sent packet counter values, the number of successes of sending, the number of successes of receiving, the number of resent frames (MAC), RLC numbers, the number of interface errors, a throughput (PHY/IP)), a TCP error rate, RTT for a particular host, a communication error displayed on an application, a delayed communication status of a browser or the like, and the like are used as the communication parameters of the learning data. In such learning data, the correct label 1 is added to learning data representing the deterioration of the communication status and the correct label 0 added to the learning data not representing the deterioration of the communication status.

When the information processing apparatus 10 located in a certain cell uploads a result of learning in the cell to the server 20, an cell ID is added to the learning result. Accordingly, the integration unit of the server 20 integrates, for each cell ID, learning results uploaded by the respective information processing apparatuses 10 and generates a shared model with the cell ID. The thus generated shared model is stored in the server 20 or base station and is distributed to the information processing apparatus 10 from the server 20 or base station in accordance with a request specifying the cell ID from the shared-model download unit 135 of the information processing apparatus 10.

In the prediction unit 136 in the information processing apparatus 10, positional information and times are comprehensively input to the shared model for each base station and prediction results of relationships between the positional information and times and communication degradation statuses of the base station are output. Accordingly, it is possible to determine positions and times of base stations at which the communication status is predicted to be deteriorated without actually measuring radio wave environments and communication quality with probes. Further, a shared model having high prediction precision can be obtained for each base station by distributed learning based on federated learning.

<Modified Example 4>

The present technology can also be applied to prediction of an activity status of the user of the information processing apparatus 10.

In this modified example 4, distributed learning based on federated learning is performed with respect to a shared model having sensor information and a wireless environment such as cellular or available IEEE802.11 relevant statistic information as input and having the user's status (stop/moving) and positional information as output. The user's status may be labelled by the user answering questions on a user interface or may be derived of other information. For example, a service of suggesting a user to use advertisement and coupon ticket of a near store or providing a user with vacancy information of a near bathroom or a time table of near transportation or the like in accordance with prediction results of user's status and positional information output from the shared model after sensor information and wireless environment information are input, are provided.

<Modified Example 5>

The server 20 may be constituted by a plurality of servers having a class relationship to each other. In this case, a server at an upper-level class may be configured to integrate shared models generated by servers at a lower-level class and generate a shared model for the upper-level class. For example, the server 20 is placed for each country, region, or municipality. Then, the server 20 at the municipality level integrates learning results uploaded from the plurality of information processing apparatuses 10 on a municipality-by-municipality basis, generates a shared model for the municipality level, and uploads an integrated learning result to the server 20 at an upper level, for example, the region level. The server 20 at the region level further integrates a plurality of integrated learning results for the municipality level uploaded by the server 20 of each municipality, generates a shared model for the region level, and uploads an integrated learning result to the server 20 at an upper level, for example, the country level. Finally, the server 20 at the country level further integrates a plurality of integrated learning results for the region level and generates a shared model for the country level.

In accordance with a download request from the information processing apparatus 10, the server 20 at each class sends a shared model for the level that the server 20 manages to the information processing apparatus 10. Accordingly, a shared model reflecting to region properties is obtained.

It should be noted that the present technology may also take the following configurations.

(1) An information processing apparatus, including an arithmetic processing unit that

> learns a model for predicting a wireless environment,
> uploads a result of the learning to a server, and
> predicts a wireless environment by using a shared model obtained by integrating one or more learning results in the server.

(2) The information processing apparatus according to (1), in which
the wireless environment is at least one of that a communication status of a communication path to which a prediction target of the wireless environment is connected is deteriorated or that characteristics of a communication path to which the prediction target of a wireless environment is not connected are not good.
(3) The information processing apparatus according to (1) or (2), in which
the arithmetic processing unit is configured to switch a communication path to be connected on the basis of a prediction result of a wireless environment.
(4) The information processing apparatus according to (3), in which
switching the wireless path by the arithmetic processing unit is switching between communication paths using different communication methods.
(5) The information processing apparatus according to (3), in which
switching the wireless path by the arithmetic processing unit is switching between different communication paths using a same communication method.
(6) The information processing apparatus according to (3), in which
the arithmetic processing unit is configured to switch the communication path at a particular timing.
(7) The information processing apparatus according to (6), in which
the timing of switching the communication path is at least any one of a timing when a communication traffic volume of an application becomes equal to or smaller than a threshold, a timing when a user does not use the information processing apparatus, or a timing depending on an attribute of a user.
(8) The information processing apparatus according to (1), in which
the arithmetic processing unit is configured to predict information about a relationship between time and position and a wireless environment.
(9) The information processing apparatus according to any one of (1) to (8), in which
the shared model is one classified for each cluster based on an attribute of a user.
(10) The information processing apparatus according to any one of (1) to (9), in which
the arithmetic processing unit is configured to predict a wireless environment by using a composite model obtained by combining the result of the learning with the shared model acquired from the server.
(11) A server, including
an arithmetic processing unit that

> integrates one or more learning results of a model for predicting a wireless environment in one or more information processing apparatuses and generates a shared model, and
> distributes the shared model to the one or more information processing apparatuses.

(12) The server according to (11), which are constituted by a plurality of server apparatuses having a class relationship to each other, in which
a server apparatus at an upper-level class of the plurality of server apparatuses is configured to integrate shared models generated by server apparatuses in a lower-level class and generate a shared model for the upper-level class.
(13) An information processing system, including:

> one or more information processing apparatuses including
> a first arithmetic processing unit that

>> learns a model for predicting a wireless environment,
>> uploads a result of the learning to a server, and
>> predicts a wireless environment by using a shared model obtained by integrating one or more learning results in the server; and

> a server including
> a second arithmetic processing unit that

integrates one or more learning results in the one or more information processing apparatuses and generates a shared model, and
distributes the shared model to the one or more information processing apparatuses.

(14) The information processing system according to (13), in which
the wireless environment is at least one of that a communication status of a communication path to which a prediction target of the wireless environment is connected is deteriorated or that characteristics of a communication path to which the prediction target of a wireless environment is not connected are not good.
(15) The information processing system according to (13) or (14), in which
the first arithmetic processing unit is configured to switch a communication path to be connected on the basis of a prediction result of a wireless environment.
(16) The information processing system according to (15), in which
switching the wireless path is switching between communication paths using different communication methods.
(17) The information processing system according to (15), in which
switching the wireless path is switching between different communication paths using a same communication method.
(18) The information processing system according to (15), in which
the first arithmetic processing unit is configured to switch the communication path at a particular timing.
(19) The information processing system according to (15), in which
the timing of switching the communication path is at least any one of a timing when a communication traffic volume of an application becomes equal to or smaller than a threshold, a timing when a user does not use the information processing apparatus, or a timing depending on an attribute of a user.
(20) The information processing system according to (13), in which
the first arithmetic processing unit is configured to predict information about a relationship between time and position and a wireless environment.
(21) The information processing system according to any one of (13) to (20), in which
the shared model is one classified for each cluster based on an attribute of a user.
(22) The information processing system according to any one of (13) to (21), in which
the first arithmetic processing unit is configured to predict a wireless environment by using a composite model obtained by combining the result of the learning with the shared model acquired from the server.
(23) An information processing method, including:

learning, in one or more information processing apparatuses, a model for predicting a wireless environment and uploading a result of the learning to a server;
integrating, in the server, one or more learning results uploaded from the one or more information processing apparatuses and generating a shared model and distributing the shared model to the one or more information processing apparatuses; and
predicting, in one or more information processing apparatuses, a wireless environment by using the shared model.

(24) The information processing method according to (23), in which
the wireless environment is at least one of that a communication status of a communication path to which a prediction target of the wireless environment is connected is deteriorated or that characteristics of a communication path to which the prediction target of a wireless environment is not connected are not good.
(25) The information processing method according to (23) or (24), in which
the information processing apparatus switches a communication path to be connected on the basis of a prediction result of a wireless environment.
(26) The information processing method according to (25), in which
switching the wireless path is switching between communication paths using different communication methods.
(27) The information processing method according to (25), in which
switching the wireless path is switching between different communication paths using a same communication method.
(28) The information processing method according to (25), in which
the information processing apparatus switches the communication path at a particular timing.
(29) The information processing method according to (25), in which
the timing of switching the communication path is at least any one of a timing when a communication traffic volume of an application becomes equal to or smaller than a threshold, a timing when a user does not use the information processing apparatus, or a timing depending on an attribute of a user.
(30) The information processing method according to (23), in which
the information processing apparatus predicts information about a relationship between time and position and a wireless environment.

(31) The information processing method according to any one of (23) to (30), in which the shared model is one classified for each cluster based on an attribute of a user.

(32) The information processing method according to any one of (23) to (31), in which the information processing apparatus predicts a wireless environment by using a composite model obtained by combining the result of the learning with the shared model acquired from the server.

Reference Signs List

| | |
|---|---|
| 10 | information processing apparatus |
| 11 | communication path control unit |
| 12 | communication unit |
| 13 | learning and prediction unit |
| 20 | server |
| 21 | learning joining instruction unit |
| 22 | learning-result integration unit |
| 23 | shared-model distribution unit |
| 100 | information processing system |
| 131 | learning joining management unit |
| 132 | learning unit |
| 133 | data storage unit |
| 134 | learning result upload unit |
| 135 | shared-model download unit |
| 136 | prediction unit |

**Claims**

1. An information processing apparatus, comprising an arithmetic processing unit that

   learns a model for predicting a wireless environment,
   uploads a result of the learning to a server, and
   predicts a wireless environment by using a shared model obtained by integrating one or more learning results in the server.

2. The information processing apparatus according to claim 1, wherein the wireless environment is at least one of that a communication status of a communication path to which a prediction target of the wireless environment is connected is deteriorated or that characteristics of a communication path to which the prediction target of a wireless environment is not connected are not good.

3. The information processing apparatus according to claim 2, wherein the arithmetic processing unit is configured to switch a communication path to be connected on a basis of a prediction result of a wireless environment.

4. The information processing apparatus according to claim 3, wherein switching the wireless path is switching between communication paths using different communication methods.

5. The information processing apparatus according to claim 3, wherein switching the wireless path is switching between different communication paths using a same communication method.

6. The information processing apparatus according to claim 3, wherein the arithmetic processing unit is configured to switch the communication path at a particular timing.

7. The information processing apparatus according to claim 6, wherein the timing of switching the communication path is at least any one of a timing when a communication traffic volume of an application becomes equal to or smaller than a threshold, a timing when a user does not use the information processing apparatus, or a timing depending on an attribute of a user.

8. The information processing apparatus according to claim 1, wherein
the arithmetic processing unit is configured to predict information about a relationship between time and position and a wireless environment.

9. The information processing apparatus according to claim 1, wherein
the shared model is one classified for each cluster based on an attribute of a user.

10. The information processing apparatus according to claim 1, wherein
the arithmetic processing unit is configured to predict a wireless environment by using a composite model obtained by combining the result of the learning with the shared model acquired from the server.

11. A server, comprising
an arithmetic processing unit that

integrates one or more learning results of a model for predicting a wireless environment in one or more information processing apparatuses and generates a shared model, and
distributes the shared model to the one or more information processing apparatuses.

12. The server according to claim 11, which are constituted by a plurality of server apparatuses having a class relationship to each other, wherein
a server apparatus at an upper-level class of the plurality of server apparatuses is configured to integrate shared models generated by server apparatuses in a lower-level class and generate a shared model for the upper-level class.

13. An information processing system, comprising:

one or more information processing apparatuses including
a first arithmetic processing unit that

learns a model for predicting a wireless environment,
uploads a result of the learning to a server, and
predicts a wireless environment by using a shared model obtained by integrating one or more learning results in the server; and

a server including
a second arithmetic processing unit that

integrates one or more learning results in the one or more information processing apparatuses and generates a shared model, and
distributes the shared model to the one or more information processing apparatuses.

14. An information processing method, comprising:

learning, in one or more information processing apparatuses, a model for predicting a wireless environment and uploading a result of the learning to a server;
integrating, in the server, one or more learning results uploaded from the one or more information processing apparatuses and generating a shared model and distributing the shared model to the one or more information processing apparatuses; and
predicting, in one or more information processing apparatuses, a wireless environment by using the shared model.

Information
processing
apparatus 10

Server 20

Download model

Central
model 1

Learning 2

Upload result of learning
(local model)

Collect and
integrate results
of learning 4

Local model 3

Download shared model

Shared
model 5

Predict wireless
environment using
shared model 6

Other information
processing
apparatus

Download shared model

Upload result of learning
from other information
processing apparatus

10´

FIG.1

EP 4 132 109 A1

FIG.2

17

20

Server

Learning joining
instruction unit    ～21

Learning-result
integration unit    ～22

Shared-model
distribution unit    ～23

# FIG.3

Information processing
apparatus    10

Server    20

Learning joining
management unit    131

Learning joining
instruction unit    21

Send identifier of model and hash value

Notification to/not to permit download latest model

Download request

Download latest model

# FIG.4

Information processing
apparatus                    10

| Learning joining
management unit |  ~131

Server                    20

| Learning joining
instruction unit |  ~21

Notify of model version information regularly

Download request

Download latest model

# FIG.5

Information processing
apparatus 10

| Learning joining management unit | ~131 |

Server 20

| Learning joining instruction unit | ~21 |

Learning joining permission notification

Notification to/not to permit learning joining

FIG.6

Flow of learning joining management unit

In operation of information processing apparatus

S1

Environment
in which learning can be
performed?

NO

YES

Send learning joining permission notification to server

S2

S6

Receive
learning joining request
notification?

NO

YES

Instruct learning unit to perform learning

S7

FIG.7

Flow of learning joining instruction unit

S3

Receive learning joining permission notification
from information processing apparatus

NO

S4

Is information
processing apparatus made to
join in learning?

YES

S5

Send learning joining request notification

S8

Send learning joining non-permission
notification to server

FIG.8

Flow of shared-model download unit

S11

| Inquire of server about presence/absence of new shared model |
| --- |

S15

Is shared-model download request received?

NO

YES

| Send download request to server |
| --- |

S16

| Download shared model |
| --- |

S19

End

FIG.9

Flow of shared-model download unit

S11

Inquire of server about presence/absence of
new shared model

S15

NO

Is shared-model
download request
received?

YES

Send download request to server

S16

Download shared model

S19

End

FIG.10

FIG.11

Acquire data such as communication parameters   S21

Input data such as communication
parameters to shared model   S22

YES

Calculate score   S23

Does score exceed
threshold?   S24   NO

YES

Request to switch communication path   S25

# FIG.12

## INTERNATIONAL SEARCH REPORT

| International application No. |
|---|
| **PCT/JP2021/013920** |

**A. CLASSIFICATION OF SUBJECT MATTER**

*H04W 36/30*(2009.01)i; *H04B 17/382*(2015.01)i; *H04B 17/391*(2015.01)i; *H04W 48/16*(2009.01)i
FI: H04B17/382; H04W36/30; H04W48/16 132; H04B17/391

According to International Patent Classification (IPC) or to both national classification and IPC

**B. FIELDS SEARCHED**

Minimum documentation searched (classification system followed by classification symbols)

H04W36/30; H04B17/382; H04B17/391; H04W48/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-211616 A (SONY CORP.) 10 October 2013 (2013-10-10)<br>entire text, all drawings | 1-14 |
| A | JP 2016-529826 A (QUALCOMM INC.) 23 September 2016 (2016-09-23)<br>entire text, all drawings | 1-14 |
| A | JP 2005-33707 A (NEC CORP.) 03 February 2005 (2005-02-03)<br>entire text, all drawings | 1-14 |
| A | JP 2005-236632 A (OKI ELECTRIC INDUSTRY CO., LTD.) 02 September 2005<br>(2005-09-02)<br>entire text, all drawings | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 June 2021** | **06 July 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/013920**

| Patent document cited in search report | | | Publication date (day/month/year) | Patent family member(s) | | | Publication date (day/month/year) |
|---|---|---|---|---|---|---|---|
| JP | 2013-211616 | A | 10 October 2013 | US 2013/0262354 A1 entire text, all drawings CN 103369584 A | | | |
| JP | 2016-529826 | A | 23 September 2016 | US 2015/0043486 A1 entire text, all drawings WO 2015/021370 A1 CN 105453640 A KR 10-2016-0041992 A | | | |
| JP | 2005-33707 | A | 03 February 2005 | (Family: none) | | | |
| JP | 2005-236632 | A | 02 September 2005 | (Family: none) | | | |

Form PCT/ISA/210 (patent family annex) (January 2015)

**EP 4 132 109 A1**